# EUROPÄISCHE PATENTANMELDUNG

(11) **EP 4 671 822 A1**
(43) Veröffentlichungstag der Anmeldung: **31.12.2025**
(21) Anmeldenummer: 25174350.6
(22) Anmeldetag: 06.05.2025
(51) Int. Cl.: G01S 13/04, G01S 13/56, G01S 13/88, G01S 13/89, H05B 47/115

(54) **INSTALLATIONSGERÄT DER GEBÄUDEINSTALLATIONSTECHNIK UMFASSEND EINEN PRÄSENZSENSOR**

(30) Priorität: 26.06.2024 DE 102024117955
(71) Anmelder: Insta GmbH, 58509 Lüdenscheid (DE)
(72) Erfinder: Gräf, Karsten, 58509 Lüdenscheid (DE); Staats, Thomas Reinhard, 58507 Lüdenscheid (DE); Wüller, Stefan, 58553 Halver (DE); Wegerhoff, Ralf, 58553 Halver (DE)
(74) Vertreter: Fobbe, Tobias

(57) **Zusammenfassung**

Vorgestellt wird ein Installationsgerät I der Gebäudeinstallationstechnik umfassend einen Präsenzsensor R zur Erfassung einer Person P innerhalb eines Raumes, eine Steuer- und Auswerteeinheit MC, einen Anschluss an eine Energieversorgung sowie eine Anzeige LED.

Besonders dabei ist, dass der Präsenzsensor R einen Radarsensor umfasst, wobei zwischen dem Erfassungsbereich EB und dem Radarsensor ein Nicht-Erfassungsbereich NB liegt und dass der Erfassungsbereich EB mittels eines Endgerätes EG einstellbar ist.

## Beschreibung

Die Erfindung betrifft ein Installationsgerät der Gebäudeinstallationstechnik umfassend einen Präsenzsensor zur Erfassung einer Person innerhalb eines Raumes, ein Betätigungselement, eine Steuer- und Auswerteeinheit, einen Anschluss an eine Energieversorgung sowie eine Anzeige.

Die Erfindung betrifft zudem ein Verfahren zum Einstellen eines Erfassungsbereiches eines solchen Installationsgerätes.

Präsenzsensoren erfreuen sich zunehmender Beliebtheit, beispielsweise zum Schalten von Licht: Hierzu wird ein pyroelektrischer Sensor zur Erfassung einer Person innerhalb des Wohnraumes, beispielsweise ein Bewegungsmelder, an einer Decke oder Wand installiert. Sobald dieser eine Person erfasst, wird dann eine (über ein Installationsgerät) ansteuerbare Leuchte angesteuert.

Nachteilig dabei ist, dass pyroelektrische Sensoren stark temperaturabhängig sind und insbesondere bei hohen Umgebungstemperaturen nicht zuverlässig detektieren. Zudem ist auch der Erfassungsbereich als solches selbst stark temperaturabhängig, so dass sich spezifische Aktionen, wie beispielsweise das Einschalten einer Schreibtischleuchte beim Hinsetzen an einen Tisch, nicht zuverlässig realisieren lassen, da die Grenzen des Erfassungsbereiches sowohl zu unpräzise an sich als auch zu unpräzise einstellbar sind.

Die Empfindlichkeit der Bewegungserfassung bei klassischen Bewegungsmeldern, die einen oder mehrere pyroelektrische Sensoren ausnutzen, ist ein Maß für die Reichweite der Erfassung; mithin den Erfassungsbereich.

Dieser kann bei aus *partner.gira.de*/*data3*/*20403210.pdf* bekannten Bewegungsmelden getrennt für die pyroelektrischen Sensoren über eine Software (auch ETS genannt) mit einem Computer parametriert werden und ist darüber hinaus vor Ort am Gerät nach der Inbetriebnahme veränderbar. Hierzu verfügt der Bewegungsmelder über ein Einstellmittel, das das Verändern der parametrierten Empfindlichkeitseinstellung aller pyroelektrischen Sensoren ermöglicht. Die Empfindlichkeit kann durch das Einstellmittel um maximal eine Stufe verringert oder erhöht werden. Dabei wird sowohl die Parametrierung durch den Computer oftmals als aufwendig und/oder unkomfortabel empfunden. Problematisch ist ferner die globale Einstellung der Empfindlichkeit des pyroelektrischen Sensors hinsichtlich der Bewegungserfassung als Maß für den Erfassungsbereich, da damit kein expliziter Erfassungsbereich definiert wird, sondern lediglich eine Empfindlichkeit. Die Definition eines bestimmten, räumlich beliebigen, Areals ist damit nicht möglich.

Nicht zuletzt deshalb werden für derartige Bewegungsmelder regelmäßig Aufsteck-Kappen aus Kunststoff mitgeliefert, die auf den pyroelektrischen Sensor aufgesetzt werden, um den Erfassungsbereich durch Blockieren des Sensors künstlich einzuschränken, um so dem gewünschten erfassten Areal näherzukommen. Auch diese Lösung ist jedoch nicht ausreichend genau und wird zudem vielfach auch als unästhetisch empfunden.

Ausgehend von diesem diskutierten Stand der Technik liegt der Erfindung daher die Aufgabe zugrunde, ein Installationsgerät der Gebäudeinstallationstechnik mit einem Präsenzsensor zu schaffen, das einerseits einen präzisen, scharf abgegrenzten, möglichst temperaturunabhängigen, räumlich beliebigen Erfassungsbereich aufweist und andererseits eine einfache Einstellungsmöglichkeiten des Erfassungsbereiches, insbesondere bei der Inbetriebnahme, eröffnet.

Gelöst wird diese Aufgabe durch ein Gebäudeinstallationsgerätesystem, Installationsgerät der Gebäudeinstallationstechnik umfassend einen Präsenzsensor zur Erfassung einer Person innerhalb eines Raumes, eine Steuer- und Auswerteeinheit, einen Anschluss an eine Energieversorgung sowie eine Anzeige, wobei der Präsenzsensor einen Radarsensor umfasst, wobei zwischen dem Erfassungsbereich und dem Radarsensor ein Nicht-Erfassungsbereich liegt und der Erfassungsbereich mittels eines Endgerätes einstellbar ist.

Der Kerngedanke der Erfindung besteht einerseits darin, dass bei dem erfindungsgemäßen Installationsgerät der Gebäudeinstallationstechnik mit einem Präsenzsensor zur Erfassung einer Person innerhalb eines Raumes zwischen dem Erfassungsbereich und dem Radarsensor ein Nicht-Erfassungsbereich liegt. Damit wird auf geschickte Art und Weise die Präzision eines erfindungsgemäß vorgesehenen Radarsensors dazu genutzt, den Erfassungsbereich zwischen erfasster Person und dem Radarsensor beziehungsweise dem Installationsgerät scharf abzugrenzen, so dass beispielsweise das Hinsetzen einer Person an einen Tisch gegenüber dem bloßen Vorbeilaufen an dem Installationsgerät unterscheidbar gemacht wird. Dieses wird dabei auf vollkommen unauffällige Art und Weise, insbesondere ohne das Aufbringen einer Abdeckkappe zum Blockieren des Sensors, wie es bei vorbekannten pyroelektrischen Sensoren regelmäßig der Fall ist, erreicht.

Der Kerngedanke der Erfindung besteht andererseits darin, dass der Erfassungsbereich mittels eines Endgerätes einstellbar ist, so dass ein räumlich beliebiges Areal erfassbar oder eben nicht erfassbar wird. Dabei wird effektiv vermieden, dass ein Elektroinstallateur erforderlich wird, da der Endanwender durch eine einfache Eingabe auf seinem Endgerät, auf dem regelmäßig eine entsprechende Applikation installiert ist, den Erfassungsbereich eingeben kann. Als Unterstützung zur Einstellung des Erfassungsbereiches und/oder Nicht-Erfassungsbereiches verfügt das erfindungsgemäße Installationsgerät über eine Anzeige.

In einer besonders bevorzugten Ausführungsform des erfindungsgemäßen Installationsgerätes ist dieses ein Lichtschalter/Lichttaster oder ein Jalousieschalter/Jalousietaster. Dabei ist einerseits der Radarsensor unsichtbar hinter einem Betätigungselement angeordnet und andererseits entfällt die Notwendigkeit, eine eigene Installation mit einem Anschluss an eine Energieversorgung vorsehen zu müssen. Ferner weist ein solches erfindungsgemäßes Installationsgerät damit eine Höhe von ca. 1,1m über dem Boden auf, so dass - beispielsweise im Gegensatz zu einer Steckdose in Bodennähe - ein guter Überblick über die erfasste Fläche gegeben ist, so dass vorteilhafterweise die Präzision und Zuverlässigkeit der Erfassung verbessert ist.

Gemäß einer bevorzugten Ausführungsform des erfindungsgemäßen Installationsgerätes ist die Fläche des Erfassungsbereiches durch das Endgerät verschiebbar. Dieses bietet den Vorteil, dass die zuerst aufgespannte Fläche des Erfassungsbereiches dann mittels des Endgerätes an die gewünschte Position geschoben werden kann. So kann beispielsweise ein im Raum verrückter, durch das erfindungsgemäße Installationsgerät erfasster, Tisch derart abgebildet werden, dass der Erfassungsbereich nicht neu aufgespannt, sondern lediglich mittels des Endgerätes verschoben wird. Dieses erhöht die Flexibilität und den Bedienkomfort auf wirksame Weise.

In einer besonders bevorzugten Ausführungsform des erfindungsgemäßen Installationsgerätes wird durch das Endgerät zusätzlich zum Erfassungsbereich explizit ein Nicht-Erfassungsbereich aufgespannt, so dass bestimmte Bereiche explizit ausgeschlossen werden können und die Präzision einer scharfen Abgrenzung weiter verbessert wird. Dieses wird zum Beispiel damit erreicht, dass das erfindungsgemäße Installationsgerät eine Person im Nicht-Erfassungsbereich detektiert, aber die Steuer- und Auswerteeinheit dafür sorgt, dass dieses nicht als Detektion in dem Erfassungsbereich gewertet wird, beispielsweise wenn nur ein kleiner Körperteil, beispielsweise eine Hand, für wenige Sekunden oder Sekundenbruchteile in den Erfassungsbereich gelangt, während der Hauptteil des Körpers klar und dauerhaft im Nicht-Erfassungsbereich lokalisiert ist.

In einer weiteren Ausführungsform des erfindungsgemäßen Installationsgerätes ist der Erfassungsbereich und/oder der Nicht-Erfassungsbereich in einem nichtflüchtigen Speicher der Steuer- und Auswerteeinheit des Installationsgerätes oder in einem zentralen Speicher abgelegt. Dieses bietet den Vorteil, dass bei einem Stromausfall eingespeicherte Konfigurationen erhalten bleiben.

In einer zur Einrichtung einer eigenen Automatisierung beziehungsweise von Szenen besonders favorisierten Ausführungsform des erfindungsgemäßen Installationsgerätes ist dieses an einen Aktor, insbesondere einen Aktor zum - von der Erfassung der Person innerhalb eines Raumes abhängigen - Steuern einer Beleuchtungseinrichtung, einer Jalousie, eines Raumthermostats und/oder eines elektrischen Gerätes, angeschlossen. Dabei ist besonders bevorzugt der Erfassungsbereich vollständig von einem Nicht-Erfassungsbereich umschlossen, so dass die Erkennungszuverlässigkeit maximiert wird.

Gemäß einer weiteren Ausführungsform des erfindungsgemäßen Installationsgerätes umfasst der Erfassungsbereich einen dauerhaften Aufenthaltsbereich, insbesondere einen Tisch, einen Sitzplatz oder ein Bett. Damit wird der Einsatz für besonders relevante und attraktive Erfassungsbereiche sichergestellt.

Gemäß einer weiteren Ausführungsform des erfindungsgemäßen Installationsgerätes ist der Erfassungsbereich durch das Endgerät höhenverstellbar. So kann beispielsweise sichergestellt werden, dass Tiere, die auf einem Boden laufen, aber ein Erfassungsbereich in einer gewissen Höhe über dem Boden gewünscht, beispielsweise mindestens 70cm, ist, systematisch ausgeblendet werden.

Gemäß einer weiteren Ausführungsform des erfindungsgemäßen Installationsgerätes ist das Endgerät über einen KNX-Server an das Installationsgerät angebunden.

Zudem betrifft die Erfindung ein Verfahren zum Einstellen eines Erfassungsbereiches eines solchen Installationsgerätes umfassend die Schritte:
- Positionieren und Verharren einer Person mit dem Endgerät an einem Ort, der einer Grenze zwischen dem Erfassungsbereich und dem Nicht-Erfassungsbereich entspricht,
- Bestätigung der Grenze durch Eingabebefehl auf dem Endgerät,
- Abspeichern der Grenze.

Nachfolgend ist die Erfindung unter Bezugnahme auf die beigefügten Figuren anhand diverser Ausführungsbeispiele beschrieben. Es zeigen:
- **Fig. 1:**: eine schematische Seitenansicht eines erfindungsgemäßen Installationsgerätes, wobei zwischen dem Erfassungsbereich und dem Radarsensor ein Nicht-Erfassungsbereich liegt, und
- **Fig. 2:**: eine schematische Seitenansicht eines erfindungsgemäßen Installationsgerätes, wobei der Erfassungsbereich vollständig von einem Nicht-Erfassungsbereich umschlossen ist.

In den verschiedenen Figuren sind gleiche Teile stets mit den gleichen Bezugszeichen versehen und werden daher in der Regel auch jeweils nur einmal benannt beziehungsweise erwähnt.

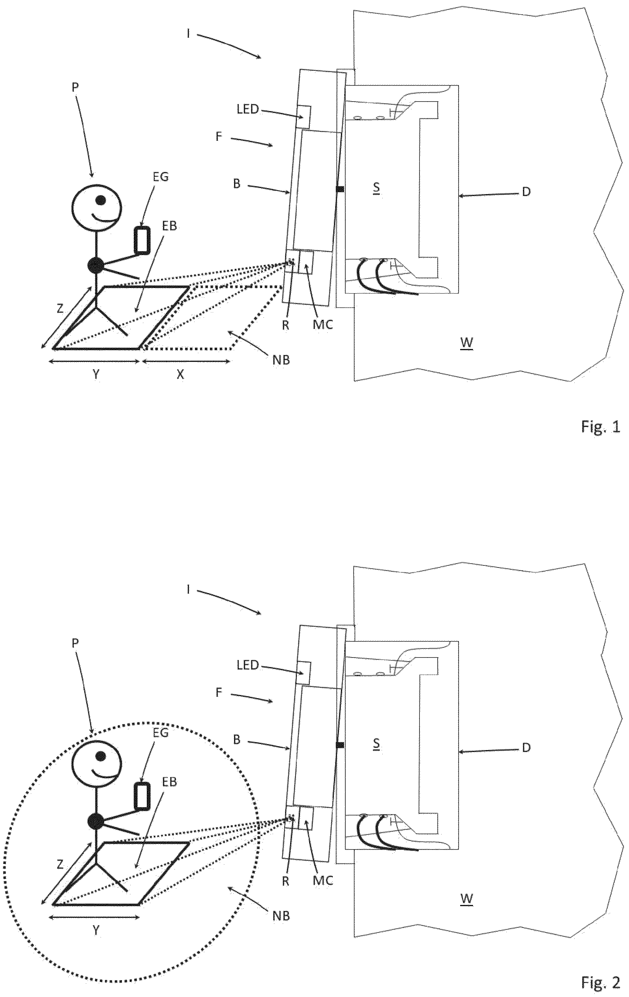

Figur 1 zeigt ein erfindungsgemäßes Installationsgerät I umfassend einen Präsenzsensor R zur Erfassung einer Person P innerhalb eines Raumes, eine Steuer- und Auswerteeinheit MC, einen Anschluss an eine Energieversorgung sowie eine Anzeige LED. Vorliegend ist das erfindungsgemäße Installationsgerät I als ein einem Betätigungselement B aufweisender Lichtschalter S in einer in einer Wand W installierten Installationsdose D ausgeführt.

Besonders vorteilhaft ist, dass der Präsenzsensor R einen Radarsensor umfasst, wobei der Erfassungsbereich EB des Radarsensors mittels eines Endgerätes EG einstellbar ist. wobei zwischen dem Erfassungsbereich EB und dem Radarsensor ein Nicht-Erfassungsbereich NB liegt. Der Erfassungsbereich EB ist in diesem Ausführungsbeispiel als Rechteck mit der Breite Z und der Länge Y ausgeführt, wobei der Nichterfassungsbereich NB zwischen dem Erfassungsbereich EB und dem Radarsensor eine Länge X und ebenfalls die Breite Z aufweist. Dabei wird es auf präzise Art und Weise ermöglicht, ein bloßes Vorbeigehen der Person P an dem Radarsensor im zwischen Erfassungsbereich EB und Radarsensor angeordneten Nichterfassungsbereich NB auszublenden, sondern nur ein Betreten des Erfassungsbereiches EB als Erfassung der Person P zu werten.

Figur 2 zeigt ein weiteres erfindungsgemäßes Installationsgerät I, wobei der Erfassungsbereich EB vollständig von einem Nicht-Erfassungsbereich NB umschlossen ist. Ein solcher Nicht-Erfassungsbereich NB kann dabei ebenfalls explizit das Endgerät EG eingestellt werden. Bevorzugt ist der Erfassungsbereich EB ein dauerhafter (beispielsweise mehr als 30 Sekunden Verharren der Person in dem Erfassungsbereich EB) Aufenthaltsbereich, insbesondere ein Tisch, ein Sitzplatz oder ein Bett.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- B: Betätigungselement
- D: Installationsdose
- EB: Erfassungsbereich
- EG: Endgerät
- F: Finger
- I: Installationsgerät
- LED: Anzeige
- MC: Steuer- und Auswerteeinheit
- NB: Nicht- Erfassungsbereich
- P: Person
- R: Präsenzsensor
- S: Lichtschalter
- W: Wand
- X: Länge
- Y: Länge
- Z: Breite

## Patentansprüche

1. Installationsgerät (I) der Gebäudeinstallationstechnik umfassend einen Präsenzsensor (R) zur Erfassung einer Person (P) innerhalb eines Raumes, eine Steuer- und Auswerteeinheit (MC), einen Anschluss an eine Energieversorgung sowie eine Anzeige (LED), **dadurch gekennzeichnet, dass** der Präsenzsensor (R) einen Radarsensor umfasst, wobei zwischen dem Erfassungsbereich (EB) und dem Radarsensor ein Nicht-Erfassungsbereich (NB) liegt und dass der Erfassungsbereich (EB) mittels eines Endgerätes (EG) einstellbar ist.

2. Installationsgerät (I) nach Anspruch 1, **dadurch gekennzeichnet, dass** das Installationsgerät (I) ein Lichtschalter (S)/Lichttaster oder ein Jalousieschalter/Jalousietaster ist.

3. Installationsgerät (I) nach Anspruch 1 oder 2, **dadurch gekennzeichnet, dass** die Fläche des Erfassungsbereiches (EB) durch das Endgerät (EG) verschiebbar ist.

4. Installationsgerät (I) nach einem der Ansprüche 1 bis 3, **dadurch gekennzeichnet, dass** durch das Endgerät (EG) zusätzlich zum Erfassungsbereich (EB) explizit ein Nicht-Erfassungsbereich (NB) aufgespannt wird.

5. Installationsgerät (I) nach einem der Ansprüche 1 bis 4, **dadurch gekennzeichnet, dass** der Erfassungsbereich (EB) und/oder der Nicht-Erfassungsbereich (NB) in einem nichtflüchtigen Speicher der Steuer- und Auswerteeinheit (MC) des Installationsgerätes (I) oder einem zentralen Speicher abgelegt ist.

6. Installationsgerät (I) nach einem der Ansprüche 1 bis 5, **dadurch gekennzeichnet, dass** das Installationsgerät (I) an einen Aktor, insbesondere einen Aktor zum - von der Erfassung der Person (P) innerhalb eines Raumes abhängigen - Steuern einer Beleuchtungseinrichtung, einer Jalousie, eines Raumthermostats und/oder eines elektrischen Gerätes, angeschlossen ist.

7. Installationsgerät (I) nach Anspruch 6, **dadurch gekennzeichnet, dass** der Erfassungsbereich (EB) vollständig von einem Nicht-Erfassungsbereich (NB) umschlossen ist.

8. Installationsgerät (I) nach einem der Ansprüche 1 bis 7, **dadurch gekennzeichnet, dass** der Erfassungsbereich (EB) einen dauerhaften Aufenthaltsbereich, insbesondere einen Tisch, einen Sitzplatz oder ein Bett, umfasst.

9. Installationsgerät (I) nach einem der Ansprüche 1 bis 8, **dadurch gekennzeichnet, dass** der Erfassungsbereich (EB) durch das Endgerät (EG) höhenverstellbar ist.

10. Installationsgerät (I) nach einem der Ansprüche 1 bis 9, **dadurch gekennzeichnet, dass** das Endgerät (EG) über einen KNX-Server an das Installationsgerät angebunden ist.

11. Verfahren zum Einstellen eines Erfassungsbereiches (EB) eines Installationsgerätes (I) nach einem der Ansprüche 1 bis 10, umfassend die Schritte:
- Positionieren und Verharren einer Person mit dem Endgerät (EG) an einem Ort, der einer Grenze zwischen dem Erfassungsbereich (EB) und dem Nicht-Erfassungsbereich (NB) entspricht,
- Bestätigung der Grenze durch Eingabebefehl auf dem Endgerät (EG),
- Abspeichern der Grenze.
